# EUROPEAN PATENT SPECIFICATION

(11) **EP 1 597 288 B1**
(45) Date of publication and mention of the grant of the patent: **24.05.2006**
(21) Application number: 04712291.6
(22) Date of filing: 18.02.2004
(51) Int. Cl.: C08F 8/00

(54) **MOISTURE-CROSSLINKABLE POLYMERIC COMPOSITION**
FEUCHTIGKEITSVERNETZBARE POLYMERE ZUSAMMENSETZUNG
COMPOSITION POLYMERE RETICULABLE A L'HUMIDITE

(30) Priority: 21.02.2003 US 449520 P
(43) Date of publication of application: 23.11.2005
(73) Proprietor: Dow Global Technologies Inc., Midland, Michigan 48674 (US)
(72) Inventor: HAN, Suh, Joon, Belle Mead, NJ08502 (US); WRIGHT, David, P., Somerset, NJ 08873 (US); GROSS, Laurence, H., Bridgewater, NJ 08807 (US); BISCOGLIO, Michael, B., South Plainfield, NJ 07080 (US); BARTLETT, Thorne, M., Houston, TX 77042 (US); LEECH, James, M., Doylestown, PA 18901 (US)
(74) Representative: Hayes, Adrian Chetwynd
(86) International application number: PCT/US2004/004463
(87) International publication number: WO 2004/076548

(56) References cited:
- EP-A- 0 346 101
- DE-A- 2 832 120
- US-A- 4 117 195
- US-A- 4 915 889

## Description

This invention relates to a moisture-crosslinkable polymeric composition that is useful for wire-and-cable applications, particularly low voltage outdoor applications and medium and high voltage semiconductive shield applications.

Moisture crosslinking has many benefits over peroxide or irradiation-induced crosslinking. However, one drawback to using presently available moisture crosslinkable polymeric compositions is premature crosslinking (or scorching) in the extrusion process. This premature crosslinking prevents uniform product smoothness and quality. Accordingly, there is a need for a moisture crosslinkable polymeric composition, which avoids premature crosslinking.

A moisture crosslinkable composition may be prepared from (a) the grafting of vinyl alkoxysilane to an ethylene homopolymer or (b) polymerizing vinyl alkoxysilane with ethylene. It is believed that, when applied to this moisture crosslinkable composition, the silane crosslinking chemistry relies on the participation of water to hydrolyze the pendant alkoxysilane and then condensation to a stable, crosslinking, siloxane structure. Presently available moisture crosslinkable polymeric compositions do not adequately prevent premature crosslinking.

If a suitable moisture crosslinkable polymeric composition is available, it will permit the use of conventional thermoplastic processing equipment, result in low capital investment, require less manufacturing space, and permit greater flexibility in the types of applications. Significantly, if premature crosslinking is avoided, it will prevent adhesion of polymer gel to the surface of the conventional extrusion equipment and facilitate continuous operation of the equipment.

The present invention is a moisture crosslinkable polymeric composition comprising a siloxane-functional polyolefin polymer and a thermally-treated carbon black. The invention also includes a coating prepared from the moisture crosslinkable polymeric composition as well as a wire-and-cable construction made by applying the coating over a wire or a cable.

Using information disclosed herein, a person of ordinary skill in the art could readily identify suitable wire-and-cable constructions, which may be made from the moisture-crosslinkable polymeric composition of the present invention.

The invented moisture crosslinkable polymeric composition comprises a siloxane-functional polyolefin polymer and a thermally-treated carbon black.

Suitable siloxane-functional polyolefin polymers include (a) ethylene homopolymers having a silane compound grafted thereto and (b) polymerization products of a silane compound and ethylene. Vinyl alkoxysilane is a suitable silane compound for grafting to an ethylene homopolymer. The polymerization products include copolymers and terpolymers. An example of a copolymer is the copolymer of ethylene and vinyl alkoxysilane. An example of a terpolymer is the terpolymer of ethylene, an unsaturated ester, and vinyl alkoxysilane. Preferred unsaturated esters have 4 to 20 carbon atoms.

Preferably, the thermally-treated carbon black is a carbon black, having been post reactor thermally treated at a temperature of at least 400 degrees Celsius. The carbon black may be a furnace black, thermal black, Ketjen black, acetylene black, or any grade of carbon black described in ASTM N110, N351, N472, or N550. In addition, preferably, the thermally-treated carbon black has a loss of volatiles of less than 1.0% by weight at 900 degrees Celsius in nitrogen atmosphere. More preferably, the thermally-treated carbon black has a loss of volatiles of less than 0.1 % by weight at 900 degrees Celsius in nitrogen atmosphere.

In addition, the composition may contain other additives such as antioxidants, lubricants, anti-blocking agents, catalysts, fillers, and processing aids.

In another embodiment, the invention is a coating prepared from the moisture crosslinkable polymeric composition of a siloxane-functional polyolefin polymer and a thermally-treated carbon black. In a yet another embodiment, the present invention is a wire or cable construction prepared by applying the coating over a wire or cable.

### EXAMPLES

The following non-limiting examples illustrate the invention.

### Examples 1-12: Carbon Black Masterbatch Comparatives

A carbon black masterbatch was prepared using six commercially-available carbon black materials.

The commercially-available carbon black materials included: (1) CC1150 U; (2) CSX362; (3) M8; (4) M5; (5) M2; and (6) BP3700. While CC1150 U is available from Columbian Chemicals Company, the other carbon black materials are available from Cabot Corporation. For each carbon black, the supplier provided specifications indicating the materials iodine adsorption (mg/g) as measured according to ASTM D1510 and DBP adsorption (cc/100g) as measured according to ASTM D2414. The moisture content of each carbon black was measured by Karl Fischer titration.

**Table I**

| Carbon Black | | | | | | |
|---|---|---|---|---|---|---|
| Property | Ex. 1 CC1150 U | Ex. 2 CSX362 | Ex. 3 M8 | Ex. 4 M5 | Ex. 5 M2 | Ex. 6 BP3700 |
| Iodine Adsorption, mg/g | 172 | 125 | 136 | 84 | 44 | 44 |
| DBP adsorption, cc/100g | 115 | 106 | 118 | 71 | 94 | 118 |
| Moisture, ppm | 5000 | 5000 | 3000 | 3700 | 3000 | 1000 |

It is expected that the moisture content of the thermally-treated carbon black will be less than 200 parts per million (ppm).

Each carbon black masterbatch was prepared using (1) an ethylene ethyl-acrylate copolymer ("EEA") having ethyl-acrylate present at 18 weight % and a melt index of 20 g / 10 min, (2) the carbon black, (3) an ambient cure (fast cure speed) condensation catalyst, and (4) an antioxidant mixture. The masterbatch was prepared using the following weight percents: (1) 47% EAA; (2) 45% carbon black; (3) 4% condensation catalyst; and (4) 4% antioxidant mixture.

**Table II**

| Carbon Black Masterbatch | | | | | | |
|---|---|---|---|---|---|---|
| Example | 7 | 8 | 9 | 10 | 11 | 12 |
| Carbon Black | CC1150 U | CSX362 | M8 | M5 | M2 | BP3700 |
| Moisture, ppm | 1024 | 1260 | 993 | 1040 | 1221 | 677 |

It is expected that the moisture content of a carbon black masterbatch made from or containing a thermally-treated carbon black will be less than 200 parts per million (ppm).

### Examples 13-19: The Extruded Cables

Each of the carbon black masterbatches was dry blended with a commercially-available silane-reactor copolymer at a ratio of 5.8 masterbatch to 94.2 silane-ethylene copolymer. The blended composition was extruded using a Brabender extruder over 14AWG copper wire to achieve a wall thickness of 30 mil. The surface of each extruded cable (Examples 13-18) was rough, indicating scorch due to premature crosslinking.

A control cable was extruded using a non-ambient cure (slower cure speed), three-component, silane-crosslinking system (Example 19), commercially available from The Dow Chemical Company as SI-LINK™ PE moisture cure. The control cable showed a smooth surface after extrusion, validating that the extrusion conditions can produce a smooth surface in the absence of pre-cure.

It is expected that a cable extruded from an ambient cure (fast cure speed) moisture crosslinkable polymeric composition made from or containing the thermally-treated carbon black will show a smooth surface after extrusion.

## Claims

1. A moisture crosslinkable polymeric composition comprising:
a. a siloxane-functional polyolefin polymer and
b. a thermally-treated carbon black.

2. The moisture crosslinkable polymeric composition of Claim 1 wherein the siloxane-functional polyolefin polymer is an ethylene homopolymer having a silane compound grafted thereto.

3. The moisture crosslinkable polymeric composition of Claim 2 wherein the silane compound is vinyl alkoxysilane.

4. The moisture crosslinkable polymeric composition of Claim 1 wherein the siloxane-functional polyolefin polymer is a polymerization product of a silane compound and ethylene.

5. The moisture crosslinkable polymeric composition of Claim 4 wherein the siloxane-functional polyolefin polymer is a copolymer of ethylene and vinyl alkoxysilane.

6. The moisture crosslinkable polymeric composition of Claim 4 wherein the siloxane-functional polyolefin polymer is a terpolymer of ethylene, an unsaturated ester, and vinyl alkoxysilane.

7. The moisture crosslinkable polymeric composition of Claim 4 wherein the silane compound is vinyl alkoxysilane.

8. The moisture crosslinkable polymeric composition of Claim 1 wherein the thermally-treated carbon black is a carbon black, having been post reactor thermally treated at a temperature of at least 400 degrees Celsius.

9. The moisture crosslinkable polymeric composition of Claim 8 wherein the carbon black is selected from the group consisting of furnace black, thermal black, hetjen black, and acetylene black.

10. The moisture crosslinkable polymeric composition of Claim 1 wherein the thermally-treated carbon black has a loss of volatiles of less than 1.0% by weight at 900 degrees Celsius in nitrogen atmosphere.

11. The moisture crosslinkable polymeric composition of Claim 1 wherein the thermally-treated carbon black has a loss of volatiles of less than 0.1 % by weight at 900 degrees Celsius in nitrogen atmosphere.

12. A coating prepared from the moisture crosslinkable polymeric composition of Claim 1.

13. A wire or cable construction prepared by applying the coating of Claim 12 over a wire or cable.

## Patentansprüche

1. Feuchtigkeits-vernetzbare Polymerzusammensetzung, umfassend:
a. ein Polyolefinpolymer mit Siloxangruppen und
b. einen wärmebehandelten Ruß.

2. Feuchtigkeits-vernetzbare Polymerzusammensetzung nach Anspruch 1, wobei das Polyolefinpolymer mit Siloxangruppen ein Ethylen-Homopolymer darstellt, welches mit einer aufgepfropften Silanverbindung versehen ist.

3. Feuchtigkeits-vernetzbare Polymerzusammensetzung nach Anspruch 2, wobei die Silanverbindung Vinylalkoxysilan ist.

4. Feuchtigkeits-vernetzbare Polymerzusammensetzung nach Anspruch 1, wobei das Polyolefinpolymer mit Siloxangruppen ein Polymerisationsprodukt aus einer Silanverbindung und Ethylen darstellt.

5. Feuchtigkeits-vernetzbare Polymerzusammensetzung nach Anspruch 4, wobei das Polyolefinpolymer mit Siloxangruppen ein Copolymer aus Ethylen und Vinylalkoxysilan ist.

6. Feuchtigkeits-vernetzbare Polymerzusammensetzung nach Anspruch 4, wobei das Polyolefinpolymer mit Siloxangruppen ein Terpolymer aus Ethylen, einem ungesättigten Ester und Vinylalkoxysilan darstellt.

7. Feuchtigkeits-vernetzbare Polymerzusammensetzung nach Anspruch 4, wobei die Silanverbindung Vinylalkoxysilan ist.

8. Feuchtigkeits-vernetzbare Polymerzusammensetzung nach Anspruch 1, wobei der wärmebehandelte Ruß ein Ruß ist, welcher bei einer Temperatur von mindestens 400 Grad Celsius einer Nachreaktor-Wärmebehandlung unterzogen worden ist.

9. Feuchtigkeits-vernetzbare Polymerzusammensetzung nach Anspruch 8, wobei der Ruß ausgewählt ist aus der Gruppe bestehend aus Ofenruß, Thermalruß, Ketjenruß und Acetylenruß.

10. Feuchtigkeits-vernetzbare Polymerzusammensetzung nach Anspruch 1, wobei der wärmebehandelte Ruß einen Verlust an flüchtigen Bestandteilen von weniger als 1,0 Gewichts-% bei 900 Grad Celsius in Stickstoffatmosphäre aufweist.

11. Feuchtigkeits-vernetzbare Polymerzusammensetzung nach Anspruch 1, wobei der wärmebehandelte Ruß einen Verlust an flüchtigen Bestandteilen von weniger als 0,1 Gewichts-% bei 900 Grad Celsius in Stickstoffatmosphäre aufweist.

12. Beschichtung, welche aus der Feuchtigkeits-vernetzbaren Polymerzusammensetzung nach Anspruch 1 hergestellt ist.

13. Draht- oder Kabelkonstruktion, welche durch Auftragen der Beschichtung von Anspruch 12 auf einen Draht oder ein Kabel hergestellt wird.

## Revendications

1. Composition de polymère, réticulable sous l'action de l'humidité, comprenant :
a) un polymère de type polyoléfine à fonctions siloxane,
b) et un noir de carbone traité à chaud.

2. Composition de polymère, réticulable sous l'action de l'humidité, conforme à la revendication 1, dans laquelle le polymère de type polyoléfine à fonctions siloxane est un homopolymère d'éthylène qui porte des greffons formés d'un composé de type silane.

3. Composition de polymère, réticulable sous l'action de l'humidité, conforme à la revendication 2, dans laquelle le composé de type silane est un vinyl-alcoxysilane.

4. Composition de polymère, réticulable sous l'action de l'humidité, conforme à la revendication 1, dans laquelle le polymère de type polyoléfine à fonctions siloxane est un produit de polymérisation d'éthylène et d'un composé de type silane.

5. Composition de polymère, réticulable sous l'action de l'humidité, conforme à la revendication 4, dans laquelle le polymère de type polyoléfine à fonctions siloxane est un copolymère d'éthylène et d'un vinyl-alcoxysilane.

6. Composition de polymère, réticulable sous l'action de l'humidité, conforme à la revendication 4, dans laquelle le polymère de type polyoléfine à fonctions siloxane est un terpolymère d'éthylène, d'un ester insaturé et d'un vinyl-alcoxysilane.

7. Composition de polymère, réticulable sous l'action de l'humidité, conforme à la revendication 4, dans laquelle le composé de type silane est un vinyl-alcoxysilane.

8. Composition de polymère, réticulable sous l'action de l'humidité, conforme à la revendication 1, dans laquelle le noir de carbone traité à chaud est un noir de carbone qui a subi un traitement thermique post-réacteur à une température d'au moins 400 °C.

9. Composition de polymère, réticulable sous l'action de l'humidité, conforme à la revendication 8, dans laquelle le noir de carbone est choisi dans l'ensemble constitué par du noir de four, du noir thermique, du noir Ketjen et du noir d'acétylène.

10. Composition de polymère, réticulable sous l'action de l'humidité, conforme à la revendication 1, dont le noir de carbone traité à chaud perd moins de 1,0 % en poids de matières volatiles à 900 °C sous atmosphère d'azote.

11. Composition de polymère, réticulable sous l'action de l'humidité, conforme à la revendication 1, dont le noir de carbone traité à chaud perd moins de 0,1 % en poids de matières volatiles à 900 °C sous atmosphère d'azote.

12. Revêtement préparé à partir d'une composition de polymère réticulable sous l'action de l'humidité, conforme à la revendication 1.

13. Structure de fil ou de câble fabriquée par application, sur un fil ou un câble, d'un revêtement conforme à la revendication 12.
